# EUROPEAN PATENT APPLICATION

(11) **EP 2 879 283 A1**
(43) Date of publication of application: **03.06.2015**
(21) Application number: 14191347.5
(22) Date of filing: 31.10.2014
(51) Int. Cl.: H02K 41/035

(54) **Apparatus and methods for low cost linear actuator**

(30) Priority: 31.10.2013 US 201361898140 P
(71) Applicant: SYSTEMS, MACHINES, AUTOMATION COMPONENTS CORPORATION, Carlsbad, California 92008 (US)
(72) Inventor: Neff, Edward A., Cardiff-by-the-Sea, CA California 92007 (US); Vu, Toan M., San Diego, CA California 92126 (US); Huang, David D., Carlsbad, CA California 92009 (US); Okada, Naoyuki, San Diego, CA California 92117 (US); Gladoch, Andrew, San Marcos, CA California 92069 (US); Sandoval, Jaime, San Marcos, CA California 92069 (US)
(74) Representative: Roberts, Mark Peter

(57) **Abstract**

An actuator apparatus includes a magnet housing defining an interior volume between a first opening at a first end and a second opening at a second end. Multiple magnets are included within the magnet housing. A piston assembly includes a piston housing, a coil and a shaft. A magnetic pole is configured to be received through the second opening of the magnet housing and within the interior volume. The magnetic pole defines an interior lumen and an opening in communication with the interior lumen. At least a portion of the piston assembly is configured to be movably received through the first opening of the magnet housing and within the interior volume such that the magnetic pole is received within the interior region of the piston housing and at least a portion of the shaft is received within the interior lumen of the magnetic pole.

## Description

### Cross-Reference to Related Applications

The present application claims the benefit of priority under 35 U.S.C. § 119(e) of United States Provisional Application Serial No. 61/898,140, entitled APPARATUS AND METHODS FOR LOW COST LINEAR ACTUATOR, filed October 31, 2013, the content of which is hereby incorporated by reference in its entirety for all purposes.

### Field

This disclosure relates generally to moving coil actuators and, more particularly, to low cost linear actuators and methods for making the same.

### Background

Linear actuators are mechanical devices which are used to perform repetitive actions requiring linear motion. For example, linear actuators can be used in an assembly plant for placing caps on bottles, for automatically stamping or labeling mail, for glass cutting, for placing chips on circuits, for testing various buttons or touch areas on electronic devices, for automation, and for a wide variety of other purposes as well. Pneumatic cylinders (sometimes known as air cylinders) are mechanical devices which use the power of compressed gas to produce a force in a reciprocating linear motion. Pneumatic cylinders are the most common actuators used in the automation industry. They are relatively inexpensive and the cost to a user is, for example, in the range of $75 - $150 per unit.

Pneumatic cylinders, however, have an operating drawback that results in, for example, up to 25% of the actuators being replaced 1-3 times a year, with well over, for example, 10 million pneumatic cylinders being replaced a year. A drawback of pneumatic cylinders is the inability to decelerate in rapid (>2 Hz) applications. This is because conventional techniques for deceleration tending to rely upon, for example, the use of shock absorbers and built-in cushions, cannot be used at these high cycle rates. As a consequence, the piston of the pneumatic cylinder may slam or crash into the end caps of the actuator, which can cause relatively quick failure of the pneumatic cylinder (e.g., within a 3-6 month time period).

Accordingly, a need exists for improved actuators that can operate reliably at high cycle rates and with reduced failure rates.

### Summary

Actuators are described herein that can operate at high speeds with reduced failure rates. In one aspect, an actuator apparatus includes a magnet housing having a first end and a second end. The magnet housing defines an interior volume between the first end and the second end. The magnet housing further defines a first opening at the first end and a second opening at the second end wherein the first opening and the second opening are in fluid communication with the interior volume. Multiple magnets are coupled to an interior wall of the magnet housing. A piston assembly includes a piston housing that defines an interior region, the piston assembly further including a coil and an elongate piston shaft. Each of the coil and the elongate piston shaft may be coupled to the piston housing. A magnetic pole defines an interior lumen and an opening in fluid communication with the interior lumen. The magnetic pole is configured to be received through the second opening of the magnet housing and within the interior volume of the magnet housing. At least a portion of the piston assembly is configured to be movably received through the first opening of the magnet housing and within the interior volume of the magnet housing such that as the piston assembly is moved relative to the magnet housing, the magnetic pole is received within the interior region of the piston housing and at least a portion of the elongate piston shaft is received within the interior lumen of the magnetic pole.

In another aspect, an actuator apparatus includes a cylindrical magnet housing having a first end and a second end. The cylindrical magnet housing defines an interior volume between the first end and the second end. The cylindrical magnet housing further defines a first opening at the first end and a second opening at the second end wherein the first opening and the second opening are in fluid communication with the interior volume. A plurality of magnets are included within the cylindrical magnet housing. A cylindrical piston assembly includes a piston housing that defines an interior region, the cylindrical piston assembly further including a coil and an elongate piston shaft. Each of the coil and the elongate piston shaft may be coupled to the piston housing. A cylindrical magnetic pole is configured to be received through the second opening of the cylindrical magnet housing and within the interior volume of the cylindrical magnet housing. At least a portion of the cylindrical piston assembly is configured to be movably received through the first opening of the cylindrical magnet housing and within the interior volume of the cylindrical magnet housing such that as the cylindrical piston assembly is moved relative to the cylindrical magnet housing, the magnetic pole is received within the interior region of the piston housing.

There is provided an apparatus, comprising: a magnet housing including a first end and a second end and defining an interior volume between the first end and the second end, the magnet housing further defining a first opening at the first end and a second opening at the second end wherein the first opening and the second opening are in fluid communication with the interior volume; a plurality of magnets coupled to an interior wall of the magnet housing; a piston assembly including a piston housing defining an interior region, the piston assembly further including a coil and an elongate piston shaft; and a magnetic pole defining an interior lumen and a pole opening in fluid communication with the interior lumen, the magnetic pole configured to be received through the second opening of the magnet housing and within the interior volume of the magnet housing, at least a portion of the piston assembly configured to be movably received through the first opening of the magnet housing and within the interior volume of the magnet housing such that as the piston assembly is moved relative to the magnet housing, the magnetic pole is received within the interior region of the piston housing and at least a portion of the elongate piston shaft is received within the interior lumen of the magnetic pole.

Optionally, the apparatus further comprises an end plate disposed on an end of the magnetic pole, the magnetic pole configured to be received through the second opening of the magnet housing and within the interior volume of the magnet housing such that the end plate closes the end of the magnet housing.

Optionally, the apparatus further comprises: a magnet end plate coupled to the first end of the magnetic housing, the magnet end plate defining a substantially centered opening configured to receive an end of the elongate shaft therethrough when the piston assembly is moved relative to the magnet housing.

Optionally, the apparatus further comprises: a magnet end plate coupled to the first end of the magnet housing, the magnet end plate being formed with a magnetic material such that a magnetic circuit defined by the plurality of magnets and the magnetic pole as the piston assembly moves relative to the magnet housing is substantially uniform.

Optionally, the apparatus further comprises: a linear bushing assembly coupled to the piston assembly; and a lubrication ring coupled to the linear bushing, the lubrication ring configured to continuously lubricate the piston shaft and the linear bushing assembly as the piston assembly moves relative to the magnet housing.

Optionally, the apparatus further comprises: an encoder assembly coupled to the piston assembly, the encoder assembly configured to determine a position of the piston assembly.

Optionally, the apparatus further comprises: a lock member disposed within the piston assembly and configured to prevent the piston shaft from rotating.

Optionally, the piston housing is formed with a plastic material and the piston shaft is formed with a metal material.

There is also provided an apparatus, comprising: a cylindrical magnet housing including a first end and a second end and defining an interior volume between the first end and the second end, the cylindrical magnet housing further defining a first opening at the first end and a second opening at the second end wherein the first opening and the second opening are in fluid communication with the interior volume; a plurality of magnets included within the cylindrical magnet housing; a cylindrical piston assembly including a piston housing defining an interior region, the cylindrical piston assembly further including a coil and an elongate piston shaft; and a cylindrical magnetic pole configured to be received through the second opening of the cylindrical magnet housing and within the interior volume of the cylindrical magnet housing, at least a portion of the cylindrical piston assembly configured to be movably received through the first opening of the cylindrical magnet housing and within the interior volume of the cylindrical magnet housing such that as the cylindrical piston assembly is moved relative to the cylindrical magnet housing, the magnetic pole is received within the interior region of the piston housing.

Optionally, the cylindrical magnetic pole defines an interior lumen and a pole opening in fluid communication with the interior lumen and wherein at least a portion of the elongate piston shaft is received within the interior lumen of the cylindrical magnetic pole as the cylindrical piston assembly is moved relative to the cylindrical magnet housing.

Optionally, the plurality of magnets are arranged on an interior wall of the cylindrical magnet housing.

Optionally, the apparatus further comprises: an end plate disposed on an end of the cylindrical magnetic pole, the cylindrical magnetic pole configured to be received through the second opening of the cylindrical magnet housing and within the interior volume of the cylindrical magnet housing such that the end plate closes the end of the cylindrical magnet housing.

Optionally, the apparatus further comprises: a magnet end plate coupled to the first end of the cylindrical magnetic housing, the magnet end plate defining a substantially centered opening configured to receive an end of the elongate shaft therethrough when the cylindrical piston assembly is moved relative to the cylindrical magnet housing.

Optionally, the apparatus further comprises: a magnet end plate coupled to the first end of the cylindrical magnet housing, the magnet end plate being formed with a magnetic material such that a magnetic circuit defined by the plurality of magnets and the cylindrical magnetic pole as the cylindrical piston assembly moves relative to the cylindrical magnet housing is substantially uniform.

Optionally, the apparatus further comprises: a linear bushing assembly coupled to the cylindrical piston assembly; and a lubrication ring coupled to the linear bushing, the lubrication ring configured to continuously lubricate the elongate piston shaft and the linear bushing assembly as the cylindrical piston assembly moves relative to the cylindrical magnet housing.

Optionally, the apparatus further comprises: an encoder assembly coupled to the cylindrical piston assembly, the encoder assembly configured to determine a position of the cylindrical piston assembly.

Optionally, the apparatus further comprises: a lock member disposed within the cylindrical piston assembly and configured to prevent the elongate piston shaft from rotating.

Optionally, the magnet housing is replaceable with a different magnet housing to accommodate a longer-length stroke of the piston shaft without requiring associated replacement of the piston assembly.

Optionally, the coil and the elongate piston shaft are each coupled to the piston housing.

### Brief Description of the Drawings

The teachings of the present disclosure may be more fully appreciated in connection with the following detailed description taken in conjunction with the accompanying drawings, wherein:
FIG. 1 is an exploded front perspective view of a single-coil linear motor actuator according to an embodiment.
FIG. 2 is an exploded rear perspective view of a single-coil linear motor actuator according to an embodiment.
FIG. 3A is a perspective view of a piston assembly according to an embodiment.
FIG. 3B is an exploded perspective view of the piston assembly of FIG. 3A.

### Detailed Description

Apparatus and methods for a low cost, high acceleration linear servo-actuator are described herein. The disclosed servo-actuator can provide improved performance and reduced failure rates such that overall cost to a user can be reduced. For example, although the actuators described herein may have a higher initial purchase cost than typical air cylinders, because of the reduced failure rates of the servo-actuators, the overall cost to a user can be substantially reduced relative to, for example, the cost of a typical air cylinder.

The servo-actuators described herein may include a hollow center pole that allows the piston of the actuator to slide along the center pole with the shaft of the piston able to pass into the hollow portion of the center pole. This configuration can prevent or limit the piston from forcefully contacting the magnet housing. In contrast, the piston of a typical air cylinder tends to slam or crash into the end plates of the actuator at high cycle rates. The actuators described herein can include, for example, a low mass moving piston assembly. For example, the piston assembly can be manufactured at least in part with a low cost, machinable plastic with a steel piston shaft. The mass of the piston assembly can be, for example, 40 grams. Additionally, the servo-actuators described herein can include a round design that matches the design of typical air cylinders, and hence, can easily replace air cylinders in a myriad of applications.

One or more of the components of the actuators described herein can be designed to be machinable from one or both ends of the particular component. For example, one or more of the components of the actuators described herein can be machined from CNC lathes in one setup, which is advantageous for cost and tolerance control. As described above, the actuators described herein can have a relatively low mass moving piston assembly, which can reach acceleration speeds of, for example, up to 60G, can cycle, for example, up to 2-fold faster than typical air cylinder pistons, and can last, for example, 5-10-fold longer than typical air cylinders. With an investment payback on cost of a single actuator alone of less than, for example, one year, the actuators described herein can provide a solution that can substantially reduce the large cost typically associated with failing air cylinders.

As described above, the actuators described herein can include a center pole that defines an interior lumen that can allow the piston to move freely up and down the center pole during operation of the actuator with the shaft of the piston able to move in and out of the interior lumen of the center pole. In addition, the actuators described herein can include a top magnetic housing end plate that defines a center opening that can receive the piston shaft as the piston is actuated. Each of these features can prevent or limit the piston assembly from being damaged or broken due to repeated contact with the front end cap and/or the center pole and/or a rear end plate of the actuator during operation at high cycle rates (e.g., greater than 2Hz). Additionally, the top magnet housing end plate can be formed with a magnetic material, which can enable the magnetic circuit to be balanced such that the forces applied through a stroke of the piston are substantially uniform for a set current.

An apparatus includes a magnet housing that defines an interior volume between a first opening at a first end and a second opening at a second end. Multiple magnets are coupled to an interior wall of the magnet housing. A piston assembly includes a piston housing, a coil and a shaft. A magnetic pole is configured to be received through the second opening of the magnet housing and within the interior volume of the magnet housing. The magnetic pole defines an interior lumen and an opening in communication with the interior lumen. At least a portion of the piston assembly is configured to be movably received through the first opening of the magnet housing and within the interior volume such that the magnetic pole is received within the interior region of the piston housing and at least a portion of the piston shaft is received within the interior lumen of the magnetic pole. In other words, the piston housing can move or slide along the magnetic pole during operation.

As used in this specification, the singular forms "a," "an" and "the" include plural referents unless the context clearly dictates otherwise. Thus, for example, the term "a coil" is intended to mean a single coil or multiple coils.

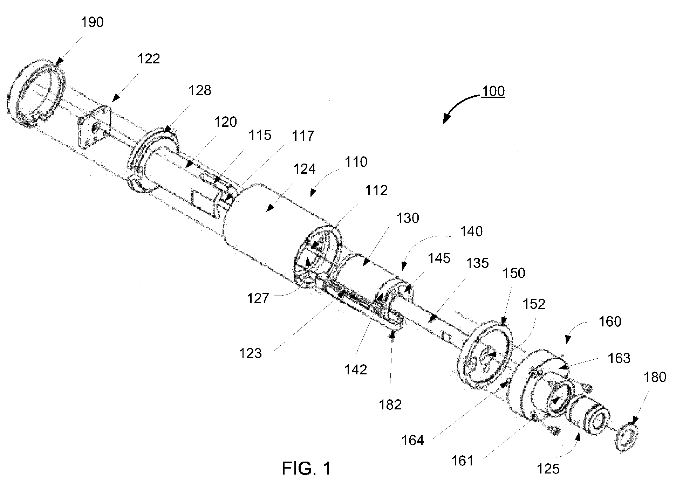

FIG. 1 is an exploded front perspective view of a single-coil linear motor actuator according to one embodiment. As shown in FIG. 1, an actuator 100 (also referred to herein as "actuator" or "servo-actuator") can include a magnet housing assembly 110 and a piston assembly 140. The magnet housing assembly 110 can include a magnet housing 124, one or more permanent magnets 112, a center pole 120, a printed wiring board or controller 122, a bottom or rear end plate 128, and a top or front end plate 150. The piston assembly 140 can include a coil 130 that is wound around a piston bobbin or housing 142, a piston shaft 135, a flex cable 182, and a linear encoder assembly 123. The actuator 100 also includes a front housing assembly 160, a bushing assembly 125, a lubrication ring 180, and a housing cover 190. Each of these components is discussed in more detail below.

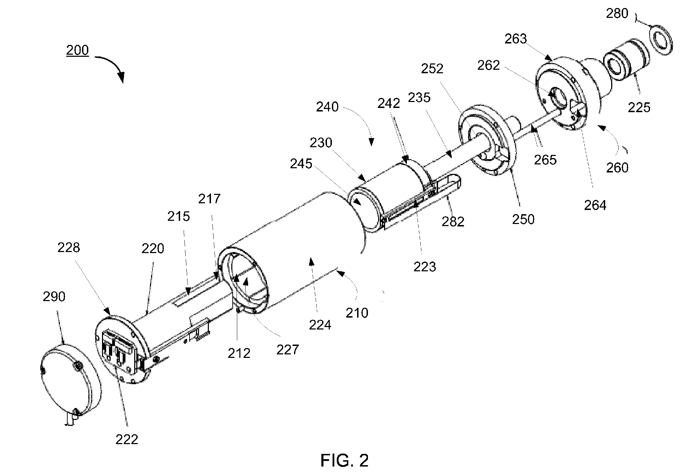

FIG. 2 is an exploded rear perspective view of a single-coil linear motor actuator (also referred to herein as "actuator" or "servo-actuator") according to an embodiment. As shown in FIG. 2, an actuator 200 (also referred to herein as "actuator" or "servo-actuator") can include a magnet housing assembly 210 and a piston assembly 240. The magnet housing assembly 210 can include a magnet housing 224, one or more permanent magnets 212, a center pole 220, a printed wiring board or controller 222, a bottom or rear end plate 228 and a top or front end plate 250. The piston assembly 215 can include a coil 230 that is wound around a piston housing or bobbin 242, a piston shaft 235, a flex cable 282 and a linear encoder assembly 223. The actuator 200 also includes a front housing assembly 260, a bushing assembly 225, a lubrication ring 280, and a housing cover 290. Each of these components is discussed in more detail below.

The actuators 100 and 200 can include the same or similar functions and some or all of the same or similar components. Thus, details about the actuator 100 and the actuator 200 are described together in the following paragraphs.

Referring to FIGS. 1 and 2, the bobbin or piston housing 142 (242) of the piston assembly 140 (240) can support an electrically conductive medium such as, for example, the coil 130 (230). The bobbin 142 (242) can define an interior region 145 (245). During operation of the linear actuator 100 (200), current is introduced through the coil 130 (230) thereby creating a magnetic field having a direction that depends on the direction that the current is flowing through the coil 130 (230). The magnitude of the magnetic field corresponds to the number of turns associated with each coil 130 (230) and the amperage conducted through the conductive material. For example, a coil 130 (230) can include 74 turns per coil, but it should be understood that any number of turns per coil may be used. The coil 130 (230) may have, for example, a resistance of approximately 1.7 ohms, 6.8 ohms per phase, and can be fabricated with a 29 gauge copper wire. Such specifications are only exemplary. It should be understood that any type of conductive material with varying specifications can be used. It should further be understood that the coils may be electrically connected to a power source and/or connected together in any manner known in the electrical and mechanical arts. The bobbin 142 (242) can be formed with a low cost, plastic material to reduce the overall mass of the piston assembly 140 (240).

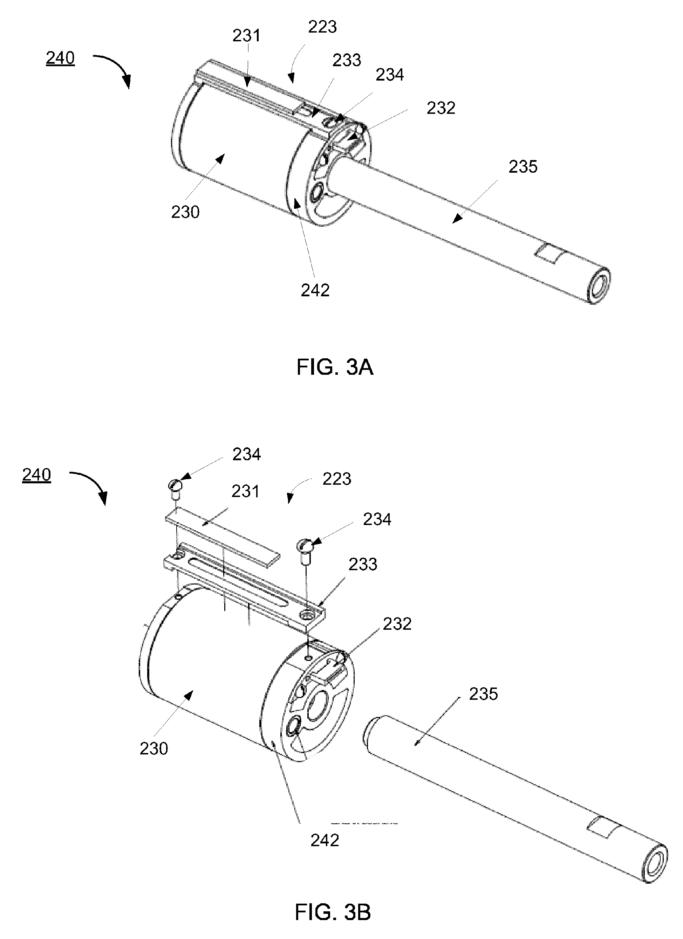

As described above, the piston assembly 140 (240) can also include the piston shaft 135 (235) that is coupled to the piston bobbin 142 (242). A portion of the piston shaft 135 (235) extends within the interior region of the bobbin 142 (242). The piston shaft 135 (235) can be formed with, for example, a metal, such as, steel. The shaft 135 (235) and the bobbin 142 (242) may be formed as a single unitary piece. The piston assembly 140 (240) also includes the flex cable 182 (282) and linear encoder assembly 123 (223) that are each coupled to the bobbin 142 (242). The function of the linear encoder assembly 123 (223) and flex cable 182 (282) are described in more detail below with reference to FIGS. 3A and 3B.

As described above, the magnet housing assembly 110 (210) may include one or more magnets 112 (212). The magnets can be, for example, permanent magnets and can be, for example, substantially cylindrical magnets or circular magnet segments, which may be coupled to an interior wall of the magnet housing 124 (224). For example, the magnets 112 (212) can be coupled to the magnet housing 110 (210) during manufacturing with various adhesives or screws. The magnets 112 (212) can be adapted to magnetically interface with the piston assembly 140 (240) when a magnetic field is present. Hence, by repeatedly alternating the direction that current is flowing through the coil 130 (230) of the piston assembly 140 (240), a linear force may be repeatedly imparted upon the piston assembly 140 (240).

The center pole 120 (220) shown in FIGS. 1 and 2 defines an interior lumen 115 (215) and an opening 117 (217) at a first end of the center pole 120 (220). The center pole 120 (220) is received within an interior volume 127 (227) defined by the magnet housing 124 (224). As shown in FIGS. 1 and 2, the rear end plate 128 (228) is coupled to a second end of the center pole 120 (220) and the printed wiring board or controller 122 (222) can be coupled to the rear end plate 128 (228) (controller 122 is shown uncoupled from the rear end plate 128 in FIG. 1). The housing cover 190 (290) can be coupled to the second end of the magnet housing 124 (224) and enclose the controller 122 (222) and rear end plate 128 (228).

The interior volume 127 (227) of the magnet housing 124 (224) can have an interior diameter sized to help ensure a tight relationship of the magnet housing 124 (224) to other components of the actuator 100 (200). The center pole 120 (220) includes an outer diameter sized to be received within the interior volume 127 (227) of the magnet housing 110 (210) such that the center pole 120 or 220 can be substantially centered within the magnet housing 124 (224) within a desired tolerance (for example, within a range of +1-20 microns). The outside and inside diameters of the center pole 120 or 220 may be within an appropriate range (for example, within a range of +1-40 microns) for optimal functioning of the actuator 100 or 200.

The front end plate 150 (250) defines an opening 152 (252) and can be coupled to the first end of the magnet housing 124 (224). The opening 152 (252) can receive an end portion of the piston shaft 135 (235) during operation of the actuator 100 (200) as described in more detail below. The front end plate 150 (250) can also be formed with a magnetic material such that when the front end plate 150 (250) is coupled to the magnet housing 124 (224) the magnetic circuit generated within the magnet assembly 110 (210) can be balanced such that the forces applied through a stroke of the piston assembly 140 (240) can be substantially uniform or the same for a set current.

As shown in FIGS. 1 and 2, the front housing assembly 160 (260) can define a front bore 161 (not shown in FIG. 2), a rear bore 262 (not shown in FIG. 1), a piston shaft housing 163 (263), an anti-rotation lock pin 164 (264), a dowel 265 (not shown in FIG. 1), and a linear bearing or bushing assembly 125 (225). The piston shaft housing 163 (263) can receive at least a portion of the piston shaft 135 (235) and a spline bearing (not shown in FIGS. 1 or 2). The piston shaft 135 (235) can include splines (series of grooves or ridges) along a portion of its length. In such embodiments, the piston shaft housing 163 (263) can be used to lock the piston shaft 135 (235) by locating one or more grooves (or ridges) of the spline in the piston shaft 135 (235) in a pre-determined orientation. For example, the piston shaft housing 163 (263) can be used to lock the piston shaft 135 (235) in an orientation that is parallel to a surface of a linear encoder scale (not shown in FIGS. 1 and 2) within, for example, 20 microns (the linear encoder scale is described in more detail below with reference to FIG. 3B). Additionally, the anti-rotation lock pin 164 (264) can also engage and extend through the moving piston assembly 140 (240) and can prevent or limit the rotation of the piston shaft 135 (235). Thus, by maintaining the position of the piston shaft 135 (235), the linear encoder scale (see 231 in FIG. 3B) and linear encoder sensing circuitry (see 232 in FIG. 3B) can be maintained in alignment. This can also help maintain the flex cable 182 (282) in a linear or straight orientation, and can help maintain the bobbin 142 (242) attached to the piston shaft 135 (235) in a coaxial configuration.

The linear bearing or bushing assembly 125 (225) can be, for example, a linear bushing by IKO Inc. (LM81517). It should be understood, however, that other structures/guide assemblies may alternatively be used. Additionally, the lubrication ring 180 (280) can be coupled to the bushing assembly 125 (225) and can provide continuous or substantially continuous lubrication to the piston shaft 135 (235) and the spline bearing (not shown in FIGS. 1 and 2). This can result in a significantly longer useful life of the actuator 100 (or 200). For example, the actuator 100 (200) can exceed, for example, up to 100 million cycles. This is a significant improvement over the typical life of unlubricated actuators that operate, for example, in approximately the range of 15-20 million cycles.

During operation of the actuator 100 (200), the piston assembly 140 (240) can move relative to magnet housing 124 (224) and be received within the interior volume 127 (227) of the magnet housing 124 (224). The piston assembly 140 (240) moves in a reciprocating manner along the outer surface of the center pole 120 (220), which as described above is disposed within the interior volume 127 (227) of the magnet housing 124 (224). The interior lumen 115 (215) of the center pole 120 (220) allows the piston shaft 135 (235) to be received therein and prevent or limit possible impact with the rear end plate 128 (228) and/or center pole 120 (220) during operation at high cycle rates (e.g., greater than 2Hz). Thus, the piston assembly 140 (240) can move freely up and down the center pole 120 (220) during operation of the actuator 100 (200) with the piston shaft 135 (235) able to be moved in and out of the interior lumen 127 (227) of the center pole 120 (220). In addition, the opening in the front end plate 152 (252) can allow at least a portion of the piston shaft 135 (235) to pass therethrough and prevent impact with the top end plate 150 (250) during operation at high cycle rates (e.g., greater than 2Hz).

FIG. 3A is a perspective view of the piston assembly 240 and FIG. 3B is an exploded perspective view of the piston assembly 240. The piston assembly 140 can include the same or similar components and the same or similar functions as the piston assembly 240 and is therefore not described in detail below. As described above, the piston assembly 240 can include a linear encoder assembly 223. The linear encoder assembly 223 can include feedback circuitry (not shown) and a linear scale 231 for indicating linear positional feedback to, for example, a controller (such as a remote computer). The linear encoder assembly 223 may include an encoder housing 233 that can be coupled to the piston assembly 240 using, for example, a threaded fastener, such as, for example, screws 234, as shown in FIGS. 3A and 3B. The linear encoder assembly 223 can thus remain fixed with respect to the piston assembly 240 as the piston assembly 240 is repeatedly actuated. The encoder housing 233 can be disposed within, for example, a cutout (not shown in FIGS. 3A and 3B) defined by the piston housing or bobbin 242. The linear encoder assembly 223 can also include a sensor, transducer or readhead (each not shown in FIGS. 2, 3A or 3B), which can be paired with the linear scale 231 that can encode position. The encoder sensor can be contained, for example, within a printed circuit board 232 and can read the linear scale 231 in order to convert the encoded position into an analog or digital signal. This in turn can then be decoded into position data by a digital readout (DRO) or motion controller (not shown in FIGS. 1 and 2). The linear encoder assembly 223 can work in either incremental or absolute modes. Motion can be determined, for example, by change in position over time. Linear encoder technologies can include, for example, optical, magnetic, inductive, capacitive and eddy current. Optical linear encoders can dominate the high resolution market and can employ shuttering/Moire, diffraction or holographic principles. Typical incremental scale periods can vary from hundreds down to sub-micrometer, and following interpolation can provide resolutions as fine as a nanometer.

Although not shown in FIGS. 3A and 3B, the linear encoder scale 231 may include a series of stripes or markings running along a length of the linear encoder scale 231. When the piston assembly 240 is actuated, the linear encoder sensor 232 (e.g., an optical reader) can count the number of stripes or markings read in order to determine the current linear position of the piston assembly 240 (e.g., a position of the bobbin 242 and/or piston shaft 235). Recorded positional data may optionally then be transmitted to a remote device for monitoring purposes. A user can optionally input one or more values to a remote device (such as a connected computer) in order to designate an amount of linear movement desired for a particular task. These values can then be transmitted to a controller (not shown in FIGS. 1, 2, 3A, and 3B) in electrical communication with the linear encoder assembly 223 such that linear movement of the piston assembly 240 can be adjusted according to the values specified.

Stroke variation and linear encoder resolution may optionally be adjusted by the user, thereby reducing costs associated with reconfiguring and/or replacing the actuator 100 (200). In addition, the actuator 100 (200) may also include a number of programmable modes for adjusting, for example, position, force and speed of the piston assembly 140 (240) during operation. Additionally, linear encoder feedback can be matched with position, enabling the verification of work done by checking the position of the piston assembly 140 (240) (e.g., a position of the bobbin 142 (242) or piston shaft 135 (235)) during the stroke of the actuator 100 (200). The stroke can be, for example, a function of various assemblies of the actuator 100 (200) (e.g., the magnet housing assembly 110 (or 210), the piston assembly 140, (240) and/or the front housing assembly 160 (260)).

A replaceable magnet housing assembly 110 (210) may be used to increase the length of the stroke, yet without requiring replacement of more expensive components that are serviceable in all stroke variations (e.g., the piston assembly 140 (240)). For example, the magnet housing assembly 110 (210) may be replaced with a more elongated magnet housing assembly 110 (210), thereby enabling a longer actuator stroke. A slot can be provided between the coil 130 (230) and the front of the piston assembly 140 (240) that is long enough to cover a stroke of a specified maximum range, and thus the piston assembly 140 (240) may be serviceable to cover various different stroke variations. The front housing assembly 160 (260) may also be designed to be long enough to cover various different stroke variations. In this manner, when the length of the stroke of the actuator 100 or 200 requires modification, fewer components may need to be replaced. Such a design may also serve to reduce the number and/or variety of parts required to be stocked as well as expedite delivery of actuator components

While FIG. 1 and FIG. 2 each depict a single-coil actuator 100, 200, the actuators described herein can include a piston assembly 140 (240) that includes multiple coils 130 (230) supported by separate bobbins 142 (242) of the same piston assembly 140 (240), and a magnet housing assembly 110 (210) containing a series of alternately magnetized magnets (e.g., NS, SN, NS, etc.). The magnet housing assembly 110 (210) and piston assembly 140 (240) for such a multi-pole configuration can be implemented using standard machining processes. The piston assembly 140 (240) may include any number of coils 130 (230) to meet the particular output parameters of the actuator. For example, to achieve a smaller stroke for a linear actuator 100 (200), it may be desirable to use only one coil 130 (230). Because coils 130 (230) can be expensive, using only one can save overall costs. With only one coil 130 (230), however, there may be less force at a set stroke value. Thus, linear actuators having more than one coil 130 (230) may be desired for tasks requiring higher stroke values. A single-coil actuator can offer simple control like a brush motor for strokes up to, for example, 25 mm. A multi-coil actuator, on the other hand, can offer larger stroke capabilities such as, for example, of up to 100 mm or more.

As discussed above, all or a portion of the manufactured parts can be machined on a CNC lathe such as the Hardinge model RS51MSY or other lathe that has the ability to machine one or both ends of a component (e.g., via sub-spindle transfer). Each part can optionally be made in a single operation on the lathe, thereby reducing and/or eliminating the need for secondary operations. These secondary operations can present additional costs and may also reduce quality by increasing dimensional variation. The components of the actuator 100 may be manufactured from aluminum or steel. It should be understood, however that other suitable materials may be used.

The actuators 100, 200 described herein can be manufactured and assembled quickly and cost effectively. Further, the actuators 100, 200 may be manufactured to be relatively small, lightweight, and compact. Optionally, an optical linear encoder assembly can provide monitoring and control over up to 100% of movement affected by actuators 100, 200. Further, the individual designs of the front housing assembly 160, 260, the magnet housing assembly 110, 210, and the piston assembly 140, 240 provide flexibility and easy reconfigurability during manufacturing such that various actuator configurations can be produced to conform to the specifications of a particular project.

While various embodiments have been described above, it should be understood that they have been presented by way of example only, and not limitation. Where methods described above indicate certain events occurring in certain order, the ordering of certain events may be modified. Additionally, certain of the events may be performed concurrently in a parallel process when possible, as well as performed sequentially as described above

Where schematics and/or embodiments described above indicate certain components arranged in certain orientations or positions, the arrangement of components may be modified. While the embodiments have been particularly shown and described, it will be understood that various changes in form and details may be made. Any portion of the apparatus and/or methods described herein may be combined in any combination, except mutually exclusive combinations. The embodiments described herein can include various combinations and/or sub-combinations of the functions, components and/or features of the different embodiments described.

## Claims

1. An apparatus, comprising:
a magnet housing including a first end and a second end and defining an interior volume between the first end and the second end, the magnet housing further defining a first opening at the first end and a second opening at the second end wherein the first opening and the second opening are in fluid communication with the interior volume;
a plurality of magnets included within the magnet housing;
a piston assembly including a piston housing defining an interior region, the piston assembly further including a coil and an elongate piston shaft; and
a magnetic pole configured to be received through the second opening of the magnet housing and within the interior volume of the magnet housing,
at least a portion of the piston assembly configured to be movably received through the first opening of the magnet housing and within the interior volume of the magnet housing such that as the piston assembly is moved relative to the magnet housing, the magnetic pole is received within the interior region of the piston housing.

2. The apparatus of claim 1, wherein the magnetic pole defines an interior lumen and a pole opening in fluid communication with the interior lumen and wherein at least a portion of the elongate piston shaft is received within the interior lumen of the magnetic pole as the piston assembly is moved relative to the magnet housing.

3. The apparatus of claim 1 or 2, wherein the plurality of magnets are arranged on an interior wall of the magnet housing.

4. The apparatus of claim 3, wherein the plurality of magnets are coupled to an interior wall of the magnet housing.

5. The apparatus of any one of the preceding claims, further comprising an end plate disposed on an end of the magnetic pole, the magnetic pole configured to be received through the second opening of the magnet housing and within the interior volume of the magnet housing such that the end plate closes the end of the magnet housing.

6. The apparatus of any one of the preceding claims, further comprising:
a magnet end plate coupled to the first end of the magnet housing, the magnet end plate defining a substantially centered opening configured to receive an end of the elongate shaft therethrough when the piston assembly is moved relative to the magnet housing.

7. The apparatus of any one of the preceding claims, further comprising:
a magnet end plate coupled to the first end of the magnet housing, the magnet end plate being formed with a magnetic material such that a magnetic circuit defined by the plurality of magnets and the magnetic pole as the piston assembly moves relative to the magnet housing is substantially uniform.

8. The apparatus of any one of the preceding claims, further comprising:
a linear bushing assembly coupled to the piston assembly; and
a lubrication ring coupled to the linear bushing, the lubrication ring configured to continuously lubricate the piston shaft and the linear bushing assembly as the piston assembly moves relative to the magnet housing.

9. The apparatus of any one of the preceding claims, further comprising:
an encoder assembly coupled to the piston assembly, the encoder assembly configured to determine a position of the piston assembly.

10. The apparatus of any one of the preceding claims, further comprising:
a lock member disposed within the piston assembly and configured to prevent the piston shaft from rotating.

11. The apparatus of any one of the preceding claims, wherein the piston housing is formed with a plastic material and the piston shaft is formed with a metal material.

12. The apparatus of any one of the preceding claims, wherein the magnet housing is cylindrical.

13. The apparatus of any one of the preceding claims, wherein the piston assembly is cylindrical and the magnetic pole is cylindrical.

14. The apparatus of any one of the preceding claims, wherein the magnet housing is replaceable with a different magnet housing to accommodate a longer-length stroke of the piston shaft without requiring associated replacement of the piston assembly.

15. The apparatus of any one of the preceding claims, wherein the coil and the elongate piston shaft are each coupled to the piston housing.
